# EUROPEAN PATENT APPLICATION

(11) **EP 4 561 116 A1**
(43) Date of publication of application: **28.05.2025**
(21) Application number: 23841904.8
(22) Date of filing: 29.05.2023
(51) Int. Cl.: H04W 4/02

(54) **COMMUNICATION METHOD AND APPARATUS**

(30) Priority: 21.07.2022 CN 202210860356
(71) Applicant: Huawei Technologies Co., Ltd., Shenzhen, Guangdong 518129 (CN)
(72) Inventor: WANG, Zhongzhen, Shenzhen, Guangdong 518129 (CN); CHEN, Qucai, Shenzhen, Guangdong 518129 (CN); HAN, Xiaojiang, Shenzhen, Guangdong 518129 (CN)
(74) Representative: Pfenning, Meinig & Partner mbB
(86) International application number: PCT/CN2023/096745
(87) International publication number: WO 2024/016836

(57) **Abstract**

This application provides a communication method and apparatus, so that in a movement process of the communication apparatus, when a neighboring relationship between different cells may continuously change, because the communication apparatus may perform communication by using different target bandwidth information based on different movement information, implementation complexity of PCI planning can be reduced, and communication performance can be improved. In the method, the communication apparatus determines target bandwidth information, where the target bandwidth information is associated with movement information of the communication apparatus; and the communication apparatus performs communication based on the target bandwidth information.

## Description

This application claims priority to Chinese Patent Application No. 202210860356.7, filed with the China National Intellectual Property Administration on July 21, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, different network devices may use a same spectrum resource (for example, a same frequency) for networking. Such an intra-frequency networking manner can improve spectrum utilization. In the intra-frequency networking manner, different cells may be distinguished by using physical cell identifiers (physical cell identifier, PCI), and PCI planning manners such as different PCIs of neighboring cells and different PCIs of different neighboring cells are used to reduce conflicts between different cells and improve network performance.

Currently, for example, a network device is a terrestrial base station. The terrestrial base station performs communication at different moments by using a same spectrum resource, so that a terminal device that accesses the terrestrial base station can obtain a stable communication service. In this case, because relative positions between different terrestrial base stations are fixed, cells corresponding to the different terrestrial base stations (each terrestrial base station corresponds to one or more cells) do not need to be changed after PCI planning is performed in a network initialization process, so that terminal devices served by the different terrestrial base stations can obtain stable communication services.

However, in a future communication network, a network device may no longer be fixed at a place on the ground. For example, the network device may be a device like a satellite, an airplane, or an uncrewed aerial vehicle. In this case, because different network devices all move, relative positions between the different network devices may no longer be fixed. Consequently, in an intra-frequency-networking-based communication system, a neighboring relationship between different cells may continuously change, resulting in a sharp increase in complexity of PCI planning and affecting communication performance.

### SUMMARY

This application provides a communication method and apparatus, so that in a movement process of the communication apparatus, when a neighboring relationship between different cells may continuously change, because the communication apparatus may perform communication by using different target bandwidth information based on different movement information, implementation complexity of PCI planning can be reduced, and communication performance can be improved.

A first aspect of this application provides a communication method. The method is performed by a communication apparatus, or the method is performed by some components (for example, a processor, a chip, or a chip system) in the communication apparatus, or the method may be implemented by a logical module or software that can implement all or some functions of the communication apparatus. In the first aspect and the possible implementations of the first aspect, an example in which the communication method is performed by the communication apparatus is used for description. The communication apparatus may be a device like a satellite, an airplane, or an uncrewed aerial vehicle. In the method, the communication apparatus determines target bandwidth information, where the target bandwidth information is associated with movement information of the communication apparatus; and the communication apparatus performs communication based on the target bandwidth information.

Based on the foregoing technical solution, after the communication apparatus determines the target bandwidth information associated with the movement information of the communication apparatus, the communication apparatus performs communication based on the target bandwidth information. The associated target bandwidth information may be different when the movement information of the communication apparatus is different. In other words, the communication apparatus may perform communication by using different target bandwidth information based on different movement information. Therefore, in a movement process of the communication apparatus, when a neighboring relationship between different cells may continuously change, because the communication apparatus may perform communication by using different target bandwidth information based on different movement information, implementation complexity of PCI planning can be reduced, and communication performance can be improved.

It should be noted that the movement information of the communication apparatus may be expressed as a movement parameter of the communication apparatus, information generated by movement of the communication apparatus, information indicating movement of the communication apparatus, or the like.

In a possible implementation of the first aspect, the method further includes: The communication apparatus obtains first information, where the first information is used to determine the movement information of the communication apparatus.

Optionally, the first information includes the movement information of the communication apparatus, or the first information includes index information of the movement information of the communication apparatus.

Based on the foregoing technical solution, before the communication apparatus determines the target bandwidth information, the communication apparatus may obtain the first information for determining the movement information of the communication apparatus, and determine the target bandwidth information based on the first information. In other words, the communication apparatus determines the target bandwidth information based on the movement information of the communication apparatus.

In a possible implementation of the first aspect, that the communication apparatus determines target bandwidth information of the communication apparatus includes: The communication apparatus determines the target bandwidth information of the communication apparatus based on first indication information, where the first indication information indicates the target bandwidth information.

Based on the foregoing technical solution, before the communication apparatus determines the target bandwidth information, the communication apparatus may receive, from another device, the first indication information indicating the target bandwidth information, so that the communication apparatus determines the target bandwidth information based on an indication of the first indication information. In other words, the communication apparatus determines the target bandwidth information based on an indication from another device.

In a possible implementation of the first aspect, the target bandwidth information includes downlink bandwidth information, and that the communication apparatus performs communication based on the target bandwidth information includes: The communication apparatus sends second information based on a bandwidth indicated by the downlink bandwidth information, where the second information includes at least one of the following: a synchronization signal block (synchronization signal/physical broadcast channel block, SS/PBCH block, an SS/PBCH block, or an SSB), remaining minimum system information (remaining minimum system information, RMSI), or other system information (other system information, OSI).

Based on the foregoing technical solution, the target bandwidth information associated with the movement information of the communication apparatus may include the downlink bandwidth information, so that the communication apparatus sends the at least one piece of second information based on the downlink bandwidth information.

In a possible implementation of the first aspect, the target bandwidth information further includes uplink bandwidth information, the second information is RMSI, and the RMSI includes indication information indicating the uplink bandwidth information and indication information indicating the downlink bandwidth information.

Based on the foregoing technical solution, the target bandwidth information associated with the movement information of the communication apparatus may include the uplink bandwidth information, and when the second information is the RMSI, the RMSI may include the indication information indicating the uplink bandwidth information and the indication information indicating the downlink bandwidth information, so that a receiver (for example, a terminal device) of the RMSI clarifies, based on the RMSI, the uplink bandwidth information and the downlink bandwidth information used by the communication apparatus, and further communicates with the communication apparatus based on the uplink bandwidth information and the downlink bandwidth information.

In a possible implementation of the first aspect, that the target bandwidth information is associated with the movement information of the communication apparatus includes: When the movement information indicates that a movement direction of the communication apparatus is a first direction, a bandwidth corresponding to the target bandwidth information is a first bandwidth, or when the movement information indicates that a movement direction of the communication apparatus is a second direction, a bandwidth corresponding to the target bandwidth information is a second bandwidth; and a frequency domain resource occupied by the first bandwidth is greater than a frequency domain resource occupied by the second bandwidth; or a frequency domain resource occupied by the first bandwidth is 0, or a frequency domain resource occupied by the second bandwidth is 0; or a frequency domain resource occupied by the first bandwidth is equal to a frequency domain resource occupied by the second bandwidth.

Based on the foregoing technical solution, the movement information of the communication apparatus may include the movement direction of the communication apparatus, that is, when the movement directions of the communication apparatus are different, the target bandwidth information corresponds to different bandwidths. In other words, the communication apparatus may perform communication by using different target bandwidth information based on different movement directions. This reduces implementation complexity of PCI planning of the communication apparatus in the different movement directions.

In addition, when the frequency domain resource occupied by the first bandwidth is greater than the frequency domain resource occupied by the second bandwidth, the communication apparatus in the different movement directions uses different frequency domain resources. Therefore, when a same communication area is covered by a communication area provided by the communication apparatus in the different movement directions (or communication areas of the communication apparatus in the different movement directions have an intersection), a terminal device that supports large-bandwidth communication can obtain, in the communication area, a high-speed network service provided by a large-bandwidth communication apparatus, so that an access delay of the terminal device is shorter, thereby improving user experience. Different terminal devices in the area can obtain a communication service with a small bandwidth. Because a beam is narrower, and system coverage is better in a communication scenario with a small bandwidth, and more stable service quality can be provided for the terminal devices.

In addition, when the frequency domain resource occupied by the first bandwidth is 0 or the frequency domain resource occupied by the second bandwidth is 0, the frequency domain resource used by the communication apparatus in at least one movement direction is 0. Interference between different frequency domain resources used by the communication apparatus in the different movement directions can be avoided, and communication efficiency is improved.

In addition, when the frequency domain resource occupied by the first bandwidth is equal to the frequency domain resource occupied by the second bandwidth, frequency domain resources used by the communication apparatus in at least two different movement directions are equal, so that the terminal device can obtain a communication service with equal uplink and downlink bandwidths.

In a possible implementation of the first aspect, the first direction is from north to south, and the second direction is from south to north; or the first direction is from south to north, and the second direction is from north to south.

Optionally, the first direction is different from the second direction. In addition to the foregoing implementation, the first direction and the second direction may be implemented in another manner. For example, the first direction is from east to west, and the second direction is from west to east, or another implementation is used. This is not limited herein.

In a possible implementation of the first aspect, a sum of the frequency domain resource occupied by the first bandwidth and the frequency domain resource occupied by the second bandwidth is an available frequency domain resource of the communication apparatus; or the frequency domain resource occupied by the first bandwidth and the frequency domain resource occupied by the second bandwidth do not overlap each other.

Based on the foregoing technical solution, when the sum of the frequency domain resource occupied by the first bandwidth and the frequency domain resource occupied by the second bandwidth is the available frequency domain resource of the communication apparatus. This can improve spectrum utilization. In addition, when the frequency domain resource occupied by the first bandwidth and the frequency domain resource occupied by the second bandwidth do not overlap each other, interference between different frequency domain resources used by the communication apparatus in the different movement directions can be avoided, and communication efficiency is improved.

In a possible implementation of the first aspect, the movement information includes at least one of the following: time information corresponding to movement, movement path information, a current position, or movement speed information.

Based on the foregoing technical solution, the movement information associated with the target bandwidth information of the communication apparatus may further include other information, so that the communication apparatus performs, when the movement information is different, communication by using different target bandwidth information.

A second aspect of this application provides a communication apparatus. The apparatus may implement the method according to any one of the first aspect or the possible implementations of the first aspect. The apparatus includes a corresponding unit or module configured to perform the method. The unit or module included in the apparatus can be implemented by software and/or hardware. For example, the apparatus may be a communication apparatus, or the apparatus may be a component (for example, a processor, a chip, or a chip system) in the communication apparatus, or the apparatus may be a logical module or software that can implement all or some functions of the communication apparatus.

The apparatus includes a processing unit and a transceiver unit. The processing unit is configured to determine target bandwidth information, where the target bandwidth information is associated with movement information of the communication apparatus. The transceiver unit is configured to perform communication based on the target bandwidth information.

In a possible implementation of the second aspect, the transceiver unit is further configured to obtain first information, where the first information is used to determine the movement information of the communication apparatus.

In a possible implementation of the second aspect, the processing unit is further configured to determine the target bandwidth information of the communication apparatus based on first indication information, where the first indication information indicates the target bandwidth information.

In a possible implementation of the second aspect, that the target bandwidth information is associated with the movement information of the communication apparatus includes: When the movement information indicates that a movement direction of the communication apparatus is a first direction, a bandwidth corresponding to the target bandwidth information is a first bandwidth, or when the movement information indicates that a movement direction of the communication apparatus is a second direction, a bandwidth corresponding to the target bandwidth information is a second bandwidth; and a frequency domain resource occupied by the first bandwidth is greater than a frequency domain resource occupied by the second bandwidth; or a frequency domain resource occupied by the first bandwidth is 0, or a frequency domain resource occupied by the second bandwidth is 0; or a frequency domain resource occupied by the first bandwidth is equal to a frequency domain resource occupied by the second bandwidth.

In a possible implementation of the second aspect, the first direction is from north to south, and the second direction is from south to north; or the first direction is from south to north, and the second direction is from north to south.

In a possible implementation of the second aspect, a sum of the frequency domain resource occupied by the first bandwidth and the frequency domain resource occupied by the second bandwidth is an available frequency domain resource of the communication apparatus; or the frequency domain resource occupied by the first bandwidth and the frequency domain resource occupied by the second bandwidth do not overlap each other.

In a possible implementation of the second aspect, the movement information includes at least one of the following: time information corresponding to movement, movement path information, a current position, or movement speed information.

In the second aspect of embodiments of this application, composition modules of the communication apparatus may be configured to perform the steps performed in the possible implementations of the first aspect, and achieve corresponding technical effect. For details, refer to the first aspect. Details are not described herein again.

A third aspect of embodiments of this application provides a communication apparatus, including at least one processor. The at least one processor is coupled to a memory, the memory is configured to store a program or instructions, and the at least one processor is configured to execute the program or the instructions, so that the apparatus implements the method according to any one of the first aspect or the possible implementations of the first aspect.

A fourth aspect of embodiments of this application provides a communication apparatus, including at least one logic circuit and an input/output interface. The logic circuit is configured to determine target bandwidth information, the input/output interface is configured to perform communication based on the target bandwidth information, and the logic circuit is further configured to perform the method according to any one of the first aspect or the possible implementations of the first aspect.

A fifth aspect of embodiments of this application provides a computer-readable storage medium storing one or more computer-executable instructions. When the computer-executable instructions are executed by a processor, the processor performs the method according to any one of the first aspect or the possible implementations of the first aspect.

A sixth aspect of embodiments of this application provides a computer program product (or referred to as a computer program) storing one or more computer programs. When the computer program product is executed by a processor, the processor performs the method according to any one of the first aspect or the possible implementations of the first aspect.

A seventh aspect of embodiments of this application provides a chip system. The chip system includes at least one processor, configured to support a communication apparatus in implementing functions according to any one of the first aspect or the possible implementations of the first aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

An eighth aspect of embodiments of this application provides a communication system. The communication system includes the communication apparatus according to the second aspect, or the communication system includes the communication apparatus according to the third aspect, or the communication system includes the communication apparatus according to the fourth aspect.

For technical effect brought by any one of the design manners of the second aspect to the eighth aspect, refer to technical effect brought by the different design manners of the first aspect. Details are not described herein again.

It can be learned from the foregoing technical solutions that, embodiments of this application have the following advantages: After the communication apparatus determines the target bandwidth information associated with the movement information of the communication apparatus, the communication apparatus performs communication based on the target bandwidth information. The associated target bandwidth information may be different when the movement information of the communication apparatus is different. In other words, the communication apparatus may perform communication by using different target bandwidth information based on different movement information. Therefore, when the neighboring relationship between the different cells may continuously change in the movement process of the communication apparatus, because the communication apparatus may perform communication by using the different target bandwidth information based on the different movement information, implementation complexity of PCI planning can be reduced, and communication performance can be improved.

### BRIEF DESCRIPTION OF DRAWINGS

FIG. 1 is a diagram of a communication scenario according to this application;
FIG. 2a is another diagram of a communication scenario according to this application;
FIG. 2b is another diagram of a communication scenario according to this application;
FIG. 3a is another diagram of a communication scenario according to this application;
FIG. 3b is another diagram of a communication scenario according to this application;
FIG. 4 is a diagram of a communication method according to this application;
FIG. 5a is another diagram of a communication scenario according to this application;
FIG. 5b is another diagram of a communication scenario according to this application;
FIG. 5c is another diagram of a communication scenario according to this application;
FIG. 5d is another diagram of a communication scenario according to this application;
FIG. 6 is a diagram of a communication apparatus according to this application;
FIG. 7 is another diagram of a communication apparatus according to this application; and
FIG. 8 is another diagram of a communication apparatus according to this application.

### DESCRIPTION OF EMBODIMENTS

The following describes technical solutions in embodiments of this application with reference to accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) Terminal device: A terminal device may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device may communicate with one or more core networks or the internet through a radio access network (radio access network, RAN). The terminal device may be a mobile terminal device like a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device like a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal device (user terminal), a user agent (user agent), a subscriber station (subscriber station, SS), customer premises equipment (customer premises equipment, CPE), a terminal (terminal), a user device (user equipment, UE), a mobile terminal (mobile terminal, MT), an uncrewed aerial vehicle, or the like. The terminal device may alternatively be a wearable device and a terminal device in a next generation communication system, for example, a terminal device in a 5G communication system or a terminal device in a future evolved public land mobile network (public land mobile network, PLMN).

(2) Network device: A network device may be a device in a wireless network. For example, the network device may be a radio access network (radio access network, RAN) node (or device), or may be referred to as a base station, through which a terminal device accesses the wireless network. Currently, some examples of the RAN device are as follows: a next generation NodeB (next generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, or the like.

In addition, in another possible case, the network device may be another apparatus providing a wireless communication function for a terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a processor, a chip, or a chip system, that can support the network device in implementing the function. The apparatus may be mounted in the network device. In the technical solutions provided in embodiments of this application, an example in which the apparatus configured to implement the function of the network device is the network device is used to describe the technical solutions provided in embodiments of this application.

(3) Configuration and preconfiguration: Both configuration and preconfiguration are used in this application. The configuration means that a network device sends configuration information of some parameters or parameter values to a terminal device by using a message or signaling, so that the terminal device determines a communication parameter or a transmission resource based on the values or the information. Similar to the configuration, the preconfiguration may be parameter information or a parameter value negotiated by a network device and a terminal device in advance, or may be parameter information or a parameter value that is used by a network device or a terminal device and that is specified in a standard protocol, or may be parameter information or a parameter value that is pre-stored in a network device or a terminal device. This is not limited in this application.

Further, these values and parameters may be changed or updated.

(4) Terms "system" and "network" in embodiments of this application may be used interchangeably. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, A and B, A and C, B and C, or A, B, and C. In addition, unless otherwise specified, ordinal numbers such as "first" and "second" in embodiments of this application are used to distinguish between a plurality of obj ects, and are not used to limit a sequence, a time sequence, priorities, or importance of the plurality of objects.

This application is applied to a long term evolution (long term evolution, LTE) system, a new radio (new radio, NR) system, or an new radio vehicle to everything (NR vehicle to everything, NR V2X) system; and is alternatively applied to a system of hybrid networking of LTE and 5G, a device-to-device (device-to-device, D2D) communication system, a machine to machine (machine to machine, M2M) communication system, internet of things (Internet of Things, IoT), an uncrewed aircraft communication system, a communication system that supports a plurality of wireless technologies, for example, an LTE technology and an NR technology, or a non-terrestrial communication system, for example, a satellite communication system, or a high-altitude communication platform. In addition, optionally, the communication system is further applicable to a narrow band-internet of things (narrow band-internet of things, NB-IoT) system, an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA 2000) system, a time division-synchronization code division multiple access (time division-synchronization code division multiple access, TD-SCDMA) system, and a future-oriented communication technology; or another communication system.

For example, the communication system includes a network device and a terminal device. The network device serves as a configuration information sending entity, and the terminal device serves as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application is applied to a terminal device in a connected state or an active (active) state, or applied to a terminal device in a non-connected (inactive) state or an idle (idle) state.

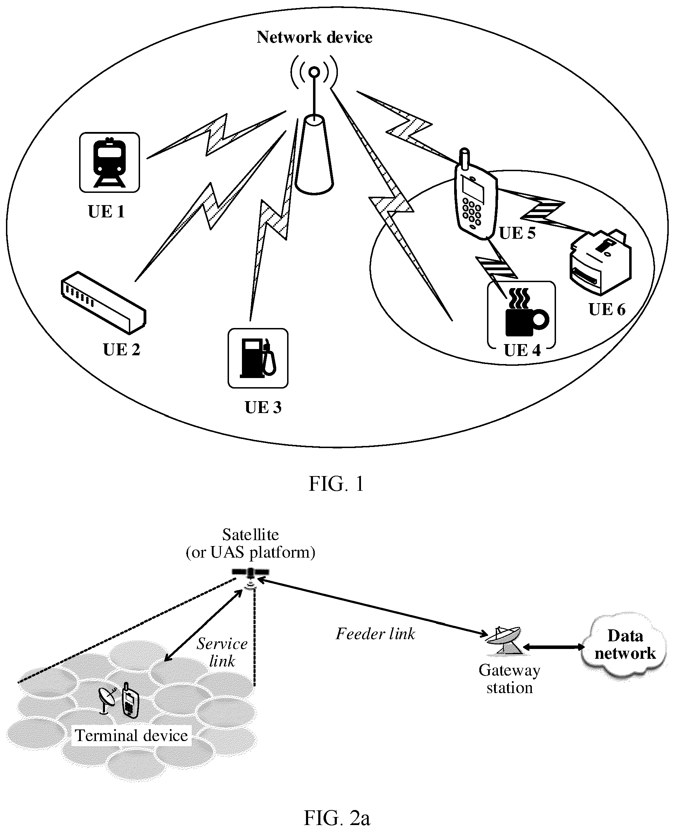

FIG. 1 is a diagram of an application scenario according to an embodiment of this application.

As shown in FIG. 1, a configuration information sending entity may be a network device, and configuration information receiving entities may be UE 1 to UE 6. In this case, a base station and the UE 1 to the UE 6 form a communication system. In the communication system, the UE 1 to the UE 6 may send uplink data to the network device. The network device needs to receive the uplink data sent by the UE 1 to the UE 6. In addition, the network device may send configuration information to the UE 1 to the UE 6.

As shown in FIG. 1, in a communication process, a sending device (or referred to as a transmitting end or a transmitting end device) may be the network device, and a receiving device (or referred to as a receiving end or a receiving end device) may be a terminal device; or the sending device may be a terminal device, and the receiving device may be the network device; or both a sending device and a receiving device may be the network devices; or both a sending device and a receiving device may be terminal devices.

It should be noted that the technical solutions in embodiments of this application are applicable to a communication system that integrates terrestrial communication and satellite communication. The communication system may also be referred to as a non-terrestrial network (non-terrestrial network, NTN) communication system. A terrestrial communication system may be, for example, a long term evolution (long term evolution, LTE) system, a universal mobile telecommunications system (universal mobile telecommunications system, UMTS), a 5G communication system or a new radio (new radio, NR) system, or a communication system developed in a next step of a 5G communication system. This is not limited herein.

Compared with a conventional mobile communication system, satellite communication has a wider coverage area, supports independence of a transmission link and communication costs and a transmission distance, and has advantages such as overcoming natural geographical obstacles like oceans, deserts, and mountains. To overcome disadvantages of a conventional communication network, satellite communication may serve as an effective supplement to the conventional network.

It is generally considered that the non-terrestrial communication network (non-terrestrial network, NTN) is a network or network segment that uses radio frequency resources on a satellite (or an uncrewed aircraft system (unmanned aircraft system, UAS) platform).

Optionally, the UAS platform includes a high-altitude communication platform (high-altitude platform station, HAPS).

For example, three types of communication satellites are included based on satellite orbit types.
1. A geostationary earth orbit (geostationary earth orbit, GEO) is 35,786 kilometers from a surface of the earth. The GEO has a characteristic that a position of view of a satellite does not change when an observer observes the satellite on the orbit from the ground, and the orbit looks as if it were fixed in the sky. This is because an orbital periodicity of the geostationary orbit satellite is exactly the same as a rotation periodicity of the earth. An advantage of the orbit is that an antenna of a ground station can be fixed towards a position of the satellite without having to rotate the antenna to track the satellite.
2. A medium earth orbit (medium earth orbit, MEO) is close to a surface of the earth and has an orbital altitude of 2,000 kilometers to 35,786 kilometers.
3. A low earth orbit (low earth orbit, LEO) is lower than a medium earth orbit and is approximately 160 kilometers to 2,000 kilometers from a surface of the earth.

Optionally, operating parameters of different satellites are shown in following Table 1.

**Table 1**

| Platforms (Platforms) | Altitude range (Altitude range) | Orbit (Orbit) | Typical beam footprint size (Typical beam footprint size) |
|---|---|---|---|
| LEO satellite | 300-1500 km | Circular around the earth (Circular around the earth) | 100-1000 km |
| MEO satellite | 7000-25000 km | | 100-1000 km |
| GEO satellite | 35786 km | Notional station keeping position fixed in terms of elevation/azimuth with respect to a given earth point (notional station keeping position fixed in terms of elevation/azimuth with respect to a given earth point) | 200-3500 km |
| UAS platform (including an HAPS) | 8-50 km (20 km for HAPS) | | 5-200 km |
| High elliptical orbit (high elliptical orbit, HEO) satellite | 400-50000 km | Elliptical around the earth (Elliptical around the earth) | 200-3500 km |

In addition, typical scenarios provided by the NTN for a user device to access include a transparent transmission payload (transparent payload) and a regenerated payload (regenerative payload).

For example, as shown in FIG. 2a, in an implementation process of a transparent payload, a satellite (or a UAS platform) (Satellite or UAS platform) and a gateway (Gateway) station serve as relays, and communication between a terminal device and a data network (Data network) needs to be implemented by using a relay process. It should be understood that the transparent payload is a payload in which a frequency carrier of an uplink radio frequency signal is changed and the frequency carrier is filtered and amplified before downlink transmission. This payload has only a radio frequency processing unit and does not have processing such as baseband demodulation or decoding.

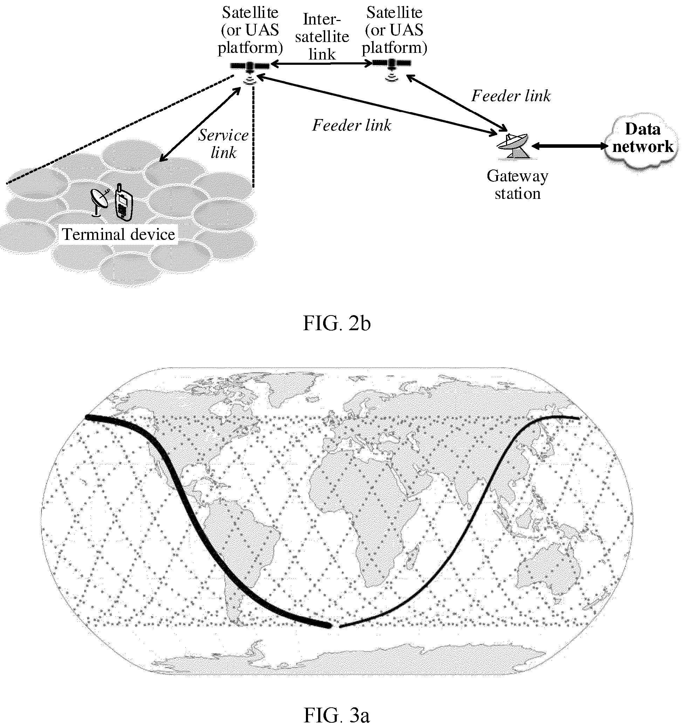

For example, as shown in FIG. 2b, in an implementation process of a regenerative payload, at least one satellite (or a UAS platform) may serve as a network device for signal conversion, and a gateway station serves as a relay, so that communication is implemented between a terminal device and a data network (Data network). It should be understood that the regenerative payload is a payload in which an uplink radio frequency signal (radio frequency signal, RF signal for short) is transformed and amplified before downlink transmission. Transformation of a signal refers to digital processing, and may include demodulation, decoding, re-encoding, re-modulation, and/or filtering.

Optionally, a communication link between a terminal device and a satellite (or a UAS platform) may be referred to as a service link (service link), a communication link between a satellite (or a UAS platform) and a gateway station may be referred to as a feeder link (feeder link), and a communication link between different satellites (or UAS platforms) may be referred to as an inter-satellite link (inter-satellite link, ISL).

It may be understood that the NTN generally has at least one of the following elements.
1. There is one or more satellite gateways (Gateways) that connect the NTN to a public data network.
2. A GEO satellite is served by one or more satellite gateways that are deployed in a satellite target coverage area (for example, an administrative region or even continental coverage). It is assumed that UE in a cell is served by only one satellite gateway.
3. An NGEO (non-geostationary earth orbit) satellite is continuously served by one or more satellite gateways at one time. The system ensures service and feeder link continuity between the continuous service satellite gateways and has sufficient time to continue mobility anchor management and handover.

The satellite may implement the transparent payload and the regenerative payload. A satellite usually produces several beams over a given service area defined by a field of view of the satellite. The beam is usually ellipse. The field of view of the satellite depends on a satellite-borne antenna pattern and a minimum elevation.

As shown in FIG. 2a, the transparent payload is about radio frequency filtering, frequency conversion, and amplification. Therefore, a waveform signal is constant and repeated.

As shown in FIG. 2b, the regenerative payload is about radio frequency filtering, frequency conversion, and amplification; and demodulation/decoding, switching and/or routing, and encoding/modulation. This is equivalent to that the satellite has all or some functions of a base station (like a gNB).

In addition, whether satellite constellations have an inter-satellite link (Inter-Satellite Link, ISL) is optional. An inter-satellite link requires that a satellite is a regeneration payload (that is, if there is an inter-satellite link, a satellite needs to be a regenerative payload). The inter-satellite link may operate at an RF frequency or an optical wave band. A terminal device is served by a satellite in a target service area.

Optionally, a geostationary earth orbit (GEO) satellite is used to provide services of a specific continent and area, or a local service. In addition, LEO and MEO constellations are used to provide services in the northern and southern hemispheres. In some cases, constellations can even provide global coverage, including polar areas. For the latter cases, appropriate orbital tilts, sufficient beams and inter-satellite links are required.

In a communication system, different network devices may use a same spectrum resource (for example, a same frequency) for networking. Such an intra-frequency networking manner can improve spectrum utilization. A vision of forming one (access) network at a same frequency has realized through a radio air interface since a 3G era. This greatly saves investment of a wireless spectrum when an operator builds a wireless network.

Currently, an example in which a network device is a terrestrial base station is used. The terrestrial base station performs communication at different moments by using a same spectrum resource, so that a terminal device that accesses the terrestrial base station can obtain a stable communication service. In this case, because relative positions between different terrestrial base stations are fixed, cells (each terrestrial base station corresponds to one or more cells) corresponding to the different terrestrial base stations do not need to be changed after PCI planning is performed in a network initialization process, so that terminal devices served by the different terrestrial base stations can obtain stable communication services.

In the intra-frequency networking manner, different cells may be distinguished by using a physical cell identifier (physical cell identifier, PCI), and PCI planning manners such as different PCIs of neighboring cells and different PCIs of different neighboring cells are used to reduce conflicts between different cells and improve network performance. For example, an NR system provides 1008 physical layer cell IDs (namely, PCIs), and an LTE system provides 504 physical layer cell IDs, which are similar to a concept of 128 scrambling codes in a TD-SCDMA system. In the LTE system, a terminal device needs to obtain two sequences through parsing in a downlink synchronization process: a primary synchronization sequence (primary synchronization signal, PSS) and a secondary synchronization sequence (secondary synchronization signal, SSS), where the PSS has three possible values, and the SSS has 168 possible values. A PCI of a cell can be obtained by combining sequence numbers of the two sequences.

Generally, physical cell identifier planning in intra-frequency networking needs to comply with at least one of the following principles.
1. A non-conflict principle ensures that PCIs of intra-frequency neighboring cells are different. The PCIs directly determine a synchronization sequence of cells and scrambling codes of a plurality of physical channels are related to the PCI. Therefore, the PCIs of the neighboring cells need to be different to avoid interference. That is, a PCI conflict is avoided.
2. A non-confusion principle ensures that PCI values of intra-frequency neighboring cells of a cell are unequal. During handover, UE reports the PCIs and measurement amount of the neighboring cells. If two neighboring cells of a serving cell use a same PCI, the serving cell cannot determine which neighboring cell UE should be handed over to. Therefore, all neighboring cells of any cell need to have different PCIs. That is, PCI confusion is avoided.
3. A PCI value with optimal interference should be selected between neighboring cells. To be specific, values of PCI modulo 3 are unequal. Values (three possibilities) of a primary synchronization sequence determine a position of a reference signal (reference signal, RS) in a PRB. Therefore, configuring a same primary synchronization sequence value should be avoided for neighboring cells (especially opposite cells). This avoids interference between RSs. That is, it is an "unequal PCI modulo 3" principle.
4. When a time domain position is fixed, same PCI modulo 6 of neighboring cells causes mutual interference to RSs in the cells. Same values of PCI modulo 30 cause mutual interference to an uplink demodulation reference signal (demodulation reference signal, DMRS) and a sounding reference signal (sounding reference signal, SRS). Therefore, it should be avoided that modulo 6 and modulo 30 of the neighboring cells are the same.
5. An optimization principle ensures that cells with a same PCI have a sufficient reuse distance and a PCI value with optimal interference is selected between intra-frequency neighboring cells.

It can bee seen that, incorrect PCI planning affects a synchronization process, demodulation and handover signaling, and reduces network performance.

In a future communication network, a network device may no longer be fixed at a place on the ground. For example, the network device may be a device like a satellite, an airplane, or an uncrewed aerial vehicle. An NTN is still used as an example herein, and a most common constellation in the NTN is a constellation Walker (Walker). The constellation Walker is generally a constellation arrangement when a satellite orbit is a circular orbit, each orbit plane is evenly distributed, and satellites in the orbit plane are evenly distributed. Generally, each orbit of the constellation Walker maintains a fixed angle with an equatorial plane.

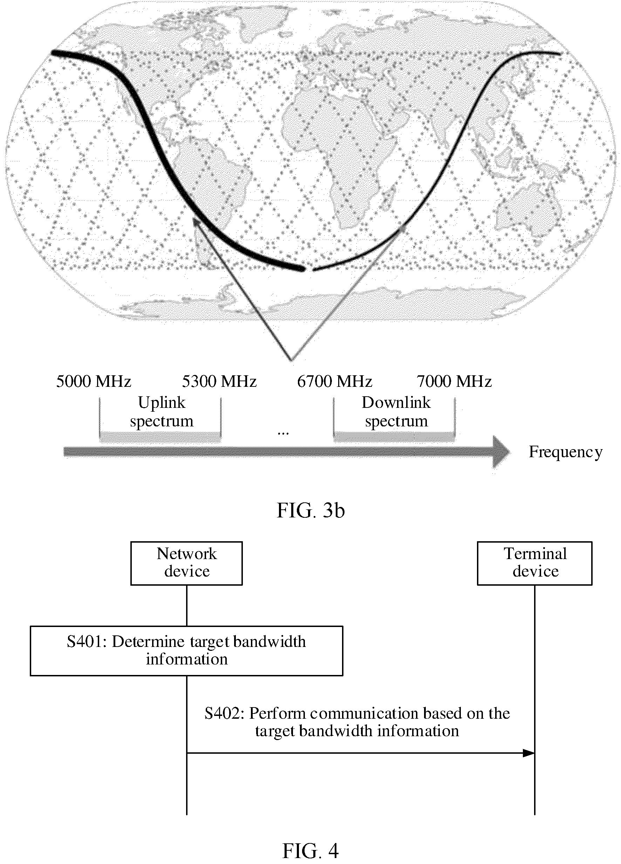

Optionally, when a satellite system flies from south to north along an operating orbit, it is referred to as an ascending orbit; otherwise, it is referred to as a descending orbit. FIG. 3a shows a running path of a satellite in a day. A running path of a circle in the running path of the satellite in FIG. 3a is used as an example. In the figure, a curve segment of a thick solid line is a descending orbit part, and a curve segment of a thin solid line is an ascending orbit part.

The constellation Walker is used in a common low-orbit satellite communication system. The constellation has the following characteristics (Starlink is used as an example).
1. A same earth area is covered by a group of satellites in an ascending orbit arc segment and a group of satellites in a descending orbit arc segment.
2. The group of satellites in the ascending orbit arc segment and a group of satellites in the descending orbit arc segment can form continuous coverage networking in the area.
3. Currently, a neighboring relationship between the group of satellites in the ascending orbit arc segment is stable, and a neighboring relationship between the satellite in the ascending orbit arc segment and the satellite in the descending orbit arc segment keeps changing.

To maximize frequency reuse, total intra-frequency networking is used on the ascending orbit and the descending orbit. A satellite communication system is used as an example. An available uplink spectrum of the satellite communication system is 5000 megahertz (MHz) to 5300 MHz, and an available downlink communication spectrum is 6700 MHz to 7000 MHz. Therefore, for a single satellite, regardless of whether the satellite is in an ascending orbit arc segment or a descending orbit arc segment, an uplink communication spectrum used by the satellite is 5000 MHz to 5300 MHz, and a downlink communication spectrum is 6700 MHz to 7000 MHz. In this solution, a neighboring relationship between an ascending-orbit satellite and a descending-orbit satellite keeps changing. Therefore, PCI planning cannot meet all principles of "unequal PCI modulo 3", "unequal PCI modulo 6", and "unequal PCI modulo 30". Therefore, network performance reduction caused by PCI planning is inevitable in this networking.

In conclusion, when the network device is no longer fixed on the ground, because different network devices all move, relative positions between the different network devices may not be fixed. As a result, in an intra-frequency-networking-based communication system, a neighboring relationship between different cells may continuously change. A sharp increase in complexity of PCI planning is caused and communication performance is affected.

To resolve the foregoing problems, this application provides a communication method and a communication apparatus, so that in a movement process of the communication apparatus, when a neighboring relationship between different cells may continuously change, because the communication apparatus may perform communication by using different target bandwidth information based on different movement information, implementation complexity of PCI planning can be reduced, and communication performance can be improved. The following describes the method provided in this application with reference to the accompanying drawings.

FIG. 4 is a diagram of a communication method according to this application. The method is performed by a communication apparatus, or the method is performed by some components (for example, a processor, a chip, or a chip system) in the communication apparatus, or the method may be implemented by a logical module or software that can implement all or some functions of the communication apparatus. In the following description, an example in which the communication method is performed by the communication apparatus and the communication apparatus is a network device is used for description. The network device may be a device like a satellite, an airplane, or an uncrewed aerial vehicle.

S401: The network device determines target bandwidth information.

In this embodiment, the network device determines the target bandwidth information in step S401, where the target bandwidth information is associated with movement information of the network device.

In a possible implementation, before step S401, the method further includes: The network device obtains first information, where the first information is used to determine the movement information of the network device. Specifically, before the network device determines the target bandwidth information in step S401, the network device may obtain the first information for determining the movement information of the network device, and determine the target bandwidth information based on the first information. In other words, the network device determines the target bandwidth information based on the movement information of the network device.

Optionally, the first information includes the movement information of the network device, or the first information includes index information of the movement information of the network device.

In a possible implementation, in step S401, a process in which the network device determines the target bandwidth information of the network device includes: The network device determines the target bandwidth information of the network device based on first indication information, where the first indication information indicates the target bandwidth information. Specifically, before the network device determines the target bandwidth information in step S401, the network device may receive, from another device, the first indication information indicating the target bandwidth information, so that the network device determines the target bandwidth information based on an indication of the first indication information in step S401. In other words, the network device determines the target bandwidth information based on an indication from another device.

In a possible implementation, in step S401, that the target bandwidth information is associated with the movement information of the network device includes: When the movement information indicates that a movement direction of the network device is a first direction, a bandwidth corresponding to the target bandwidth information is a first bandwidth, or when the movement information indicates that a movement direction of the network device is a second direction, a bandwidth corresponding to the target bandwidth information is a second bandwidth. Specifically, the movement information of the network device may include the movement direction of the network device, that is, when the movement directions of the network device are different, the target bandwidth information corresponds to different bandwidths. In other words, the network device may perform communication by using different target bandwidth information based on different movement directions. This reduces implementation complexity of PCI planning of the network device in the different movement directions.

In addition, a frequency domain resource occupied by the first bandwidth is greater than a frequency domain resource occupied by a second bandwidth (denoted as Manner 1 for ease of reference below); or a frequency domain resource occupied by the first bandwidth is 0, or a frequency domain resource occupied by the second bandwidth is 0 (denoted as Manner 2 for ease of reference below); or a frequency domain resource occupied by the first bandwidth is equal to a frequency domain resource occupied by the second bandwidth (denoted as Manner 3 for ease of reference below).

In Manner 1, when the frequency domain resource occupied by the first bandwidth is greater than the frequency domain resource occupied by the second bandwidth, the network device in the different movement directions uses different frequency domain resources. Therefore, when a same communication area is covered by a communication area provided by the network device in the different movement directions (or communication areas of the network device in the different movement directions have an intersection), a terminal device that supports large-bandwidth communication can obtain, in the communication area, a high-speed network service provided by a large-bandwidth network device, so that an access delay of the terminal device is shorter, thereby improving user experience. Different terminal devices in the area can obtain a communication service with a small bandwidth. Because a beam is narrower, and system coverage is better in a communication scenario with a small bandwidth, and more stable service quality can be provided for the terminal devices.

In Manner 2, when the frequency domain resource occupied by the first bandwidth is 0 or the frequency domain resource occupied by the second bandwidth is 0, the frequency domain resource used by the network device in at least one movement direction is 0. Interference between different frequency domain resources used by the network device in the different movement directions can be avoided, and communication efficiency is improved.

In Manner 3, when the frequency domain resource occupied by the first bandwidth is equal to the frequency domain resource occupied by the second bandwidth, frequency domain resources used by the network device in at least two different movement directions are equal, so that the terminal device can obtain a communication service with equal uplink and downlink bandwidths.

Optionally, the first direction is from north to south, and the second direction is from south to north; or the first direction is from south to north, and the second direction is from north to south. Specifically, the first direction is different from the second direction. In addition to the foregoing implementation, the first direction and the second direction may be implemented in another manner. For example, the first direction is from east to west, and the second direction is from west to east, or another implementation is used. This is not limited herein.

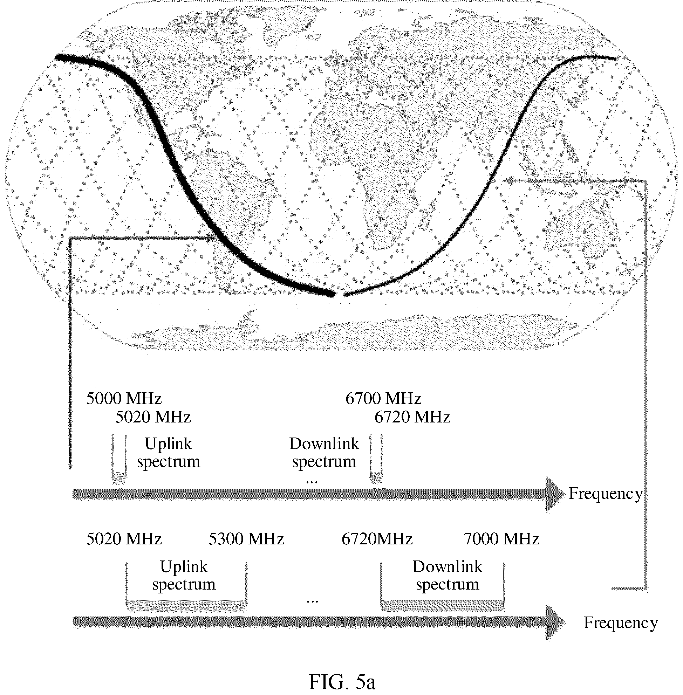

Herein, an example in which an available uplink spectrum of a network device in a satellite communication system is 5000 megahertz (MHz) to 5300 MHz and an available downlink communication spectrum is 6700 MHz to 7000 MHz is used to describe examples of implementations of Manner 1 to Manner 3 with reference to the following examples shown in FIG. 5a to FIG. 5d.

The following describes an example of Manner 1 based on the implementation examples shown in FIG. 5a to FIG. 5d.

As shown in FIG. 5a, when a satellite is located in a descending orbit arc segment corresponding to a curve segment of a thick solid line (that is, the first direction is from north to south), an uplink communication spectrum used by the device is 5000 MHz to 5020 MHz, and a downlink communication spectrum is 6700 MHz to 6720 MHz; or when a satellite is located in an ascending orbit arc segment corresponding to a curve segment of a thin solid line (that is, the first direction is from south to north), an uplink communication spectrum used by the device is 5020 MHz to 5300 MHz, and a downlink communication spectrum is 6720 MHz to 7000 MHz. In this way, subnets with different bandwidths are planned for the network device on an ascending orbit and a descending orbit, so as to resolve a problem of PCI planning in an intra-frequency network caused by continuous movement of the network devices.

In addition, an NTN system generally includes a plurality of types of terminal devices, such as a very small aperture terminal (very small aperture terminal, VSAT) and a handheld (Handheld) terminal. It is generally considered that a communication bandwidth supported by the VSAT is greater than a communication bandwidth of the handheld terminal.

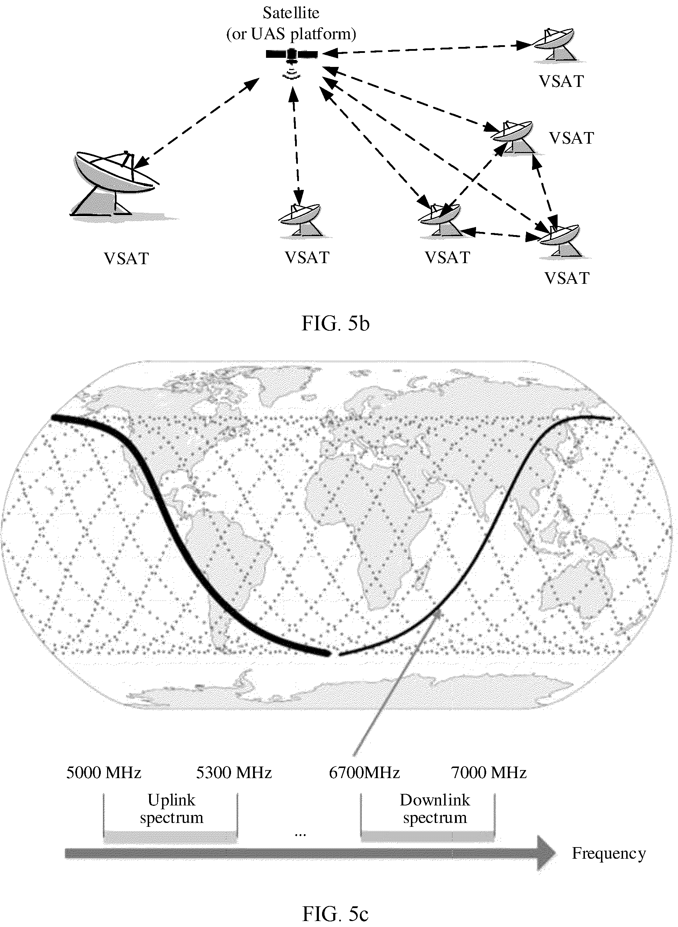

Optionally, an example of networking between a plurality of VSATs and a satellite is shown in FIG. 5b.

Optionally, differences between the VSAT and the handheld terminal are shown in the following Table 2.

**Table 2**

| Characteristics (Characteristics) | VSAT | Handheld |
|---|---|---|
| Frequency band (Frequency band) | Ka band (band) (i.e. 30 GHz UL and 20 GHz DL) | S band (i.e. 2 GHz) |
| Antenna type and configuration (Antenna type and configuration) | Directional section 6.4.1 of [2] with 60 cm equivalent aperture diameter (Directional Section 6.4.1 of [2] with 60 cm equivalent aperture diameter) | (1, 1, 2) with omnidirectional antenna element (with omnidirectional antenna element) |
| Polarization (Polarization) | Circular (Circular) | Linear (Linear): +/-45° X-pol |
| Receive antenna gain (Rx Antenna gain) | 39.7 dBi | 0 dBi per element (per element) |
| Antenna temperature (Antenna temperature) | 150 K | 290 K |
| Noise figure (Noise figure) | 1.2 dB | 7 dB |
| Transmit transmit power (Tx transmit power) | 2 W (33 dBm) | 200 mW (23 dBm) |
| Transmit antenna gain (Tx antenna gain) | 43.2 dBi | 0 dBi per element (per element) |

The VSAT is derived from a conventional satellite communication system, and therefore is also referred to as a small satellite data station or a personal earth station. The "small" herein refers to a small antenna diameter that is of a small cell device in a VSAT system and that is usually 0.3 m to 1.4 m. The device has a compact structure, is solid, intelligent, cost-effective, and easy to install, has a low requirement on a use environment, is not limited by a terrestrial network, and has flexible networking. In the NTN system, access of the handheld (Handheld) terminal is required to meet a satellite communication requirement of a mobile terminal in the future and an evolution direction of 6G space-integrated-ground communication. The handheld terminal is characterized by a small size, a small antenna size, limited power, and flexible portability.

Optionally, the VSAT and the handheld terminal include the following differences.
(1) The VSAT terminal has a high antenna gain, high transmit power, and better communication link performance, and is usually used to support broadband satellite communication.
(2) The handheld terminal has a small antenna gain, low transmit power, and poor communication link performance, and is usually used to support narrowband satellite communication.

A typical difference between uplink transmit power of the VSAT and the handheld terminal is 10 dB, and a typical difference between antenna gains is 40 dB.

In Manner 1, a spectrum (namely, the target bandwidth information) of a communication system is divided into two parts: a broadband spectrum (namely, the first bandwidth) and a narrowband spectrum (namely, the second bandwidth). The division is based on transmit power of a communication payload in the system, a spectrum for serving the handheld terminal with poor performance by using maximum power serves as a spectrum bandwidth of a narrowband system, and the remaining spectrum in the system is a spectrum bandwidth of a broadband system.

Optionally, the narrowband system may be considered as a power-limited system, that is, a bandwidth is sufficient, and power is a system bottleneck; and the broadband system may be considered as a bandwidth-limited system, that is, power is sufficient, and a bandwidth is a system bottleneck.

In Manner 1, the network device using the broadband spectrum is configured to serve the VSAT terminal with better link performance. A network plans and designs transmit power strength and a scanning beam of a system common message (including an SSB/RMSI/OSI) based on a better link budget. The common message has low transmit power spectral density and a short scanning periodicity, and provides a high-speed and low-delay broadband network service. In addition, the network device using the narrowband spectrum is configured to serve the handheld device with poor link performance. The network plans and designs transmit power strength and a scanning beam of a system common message (including an SSB/RMSI/OSI) based on a link budget acceptable to the handheld terminal. The common message has high transmit power spectral density and a long scanning periodicity, and provides a stable and reliable narrowband network service.

In addition, the satellites in the ascending orbit and the descending orbit form two subnets with different spectrum bandwidths. When a satellite enters a descending arc segment from an ascending arc segment, an on-board base station switches an operating mode, and switches from a broadband system mode to a narrowband system mode. On the contrary, when a satellite enters an ascending arc segment from a descending arc segment, an on-board base station switches an operating mode, and switches from a narrowband system mode to a broadband system mode.

Optionally, for the terminal device, during initial access, the terminal device first attempts to access from the broadband system. If link quality is good enough, the terminal device may receive the system common message of the broadband system and initiate access, so as to obtain the high-speed and low-delay broadband service. If link quality is poor, the terminal device cannot access the broadband system, and attempts to access the narrowband system after a failure. In addition, when the terminal camps on the narrowband system, the terminal is allowed to reselect the broadband system when link performance becomes better, so as to obtain the high-speed and low-delay broadband service.

For example, it is assumed that the system supports access of the handheld terminal and the VSAT terminal, and performance of the VSAT terminal is 10 dB better than that of the handheld terminal. A 20 MHz narrowband system has 512 scanning beams of a common system message (including an SSB/RMSI/OSI). A 280 MHz broadband system is to serve only the VSAT terminal, can expand only a scanning beam area of a common system message (including an SSB/RMSI/OSI) by 10 times, and therefore requires only 52 SSB scanning beams when full-power transmission is performed. This can greatly reduce a scanning periodicity and shorten an access delay of a user.

Therefore, based on an implementation process of Manner 1, the following technical effect may be implemented.
(1) Co-channel interference between the satellite on the ascending orbit and the satellite on the descending orbit is resolved. A relationship between satellites on a same subnet is stable, and networking planning is simpler.
(2) The narrowband system can greatly improve link performance. A system with a bandwidth of 300 MHz is used as an example. If the system is designed as a 280 MHz broadband and a 20 MHz narrowband, a narrowband subnet can obtain a link budget increase brought by 11.46 dB power aggregation compared with a broadband subnet.
(3) The broadband system can make full use of a system bandwidth, focus on providing the broadband service, without considering common signaling transmission of the handheld terminal, and has higher system energy efficiency.
(4) Amore reliable access service is provided for a terminal with poor link performance, and network robustness is improved.
(5) Experience of an end user is improved, network performance is improved, and network competitiveness is improved.

The following describes an example of Manner 2.

In Manner 2, to simplify PCI planning, a communication payload of the network device on the ascending orbit (or the descending orbit) may be powered off, that is, in a running process, the network device powers off the communication payload in half of time, and powers on the communication payload in the other half of time.

For example, in FIG. 5c, when the network device is located in an ascending orbit arc segment corresponding to a curve segment of a thin solid line, a used uplink communication spectrum is 5000 MHz to 5300 MHz, and a downlink communication spectrum is 6700 MHz to 7000 MHz; or when the network device is located in a descending orbit arc segment corresponding to a curve segment of a thick solid line, a communication payload of the network device is powered off. Alternatively, when the network device is located in an ascending orbit arc segment, a communication payload of the network device is powered off; or when the network device is located in a descending orbit arc segment, a used uplink communication spectrum is 5000 MHz to 5300 MHz, and a downlink communication spectrum is 6700 MHz to 7000 MHz.

Therefore, in Manner 2, a technology in which the satellite communication payload is powered off based on an ascending orbit or a descending orbit can resolve a problem caused by PCI planning.

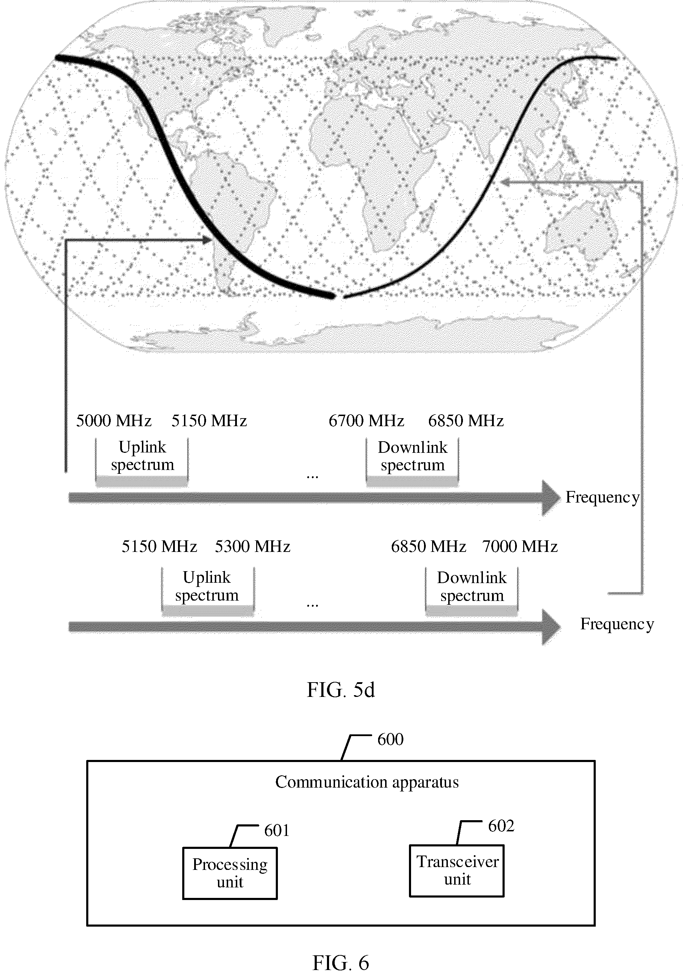

The following describes an example of Manner 3 based on the implementation example shown in FIG. 5d.

In Manner 3, to simplify PCI planning, equal bandwidth frequency division networking for an ascending orbit and a descending orbit may be used, that is, an ascending orbit segment uses half of a spectrum bandwidth in the system, and a descending orbit segment uses the other half of the spectrum bandwidth.

For example, in FIG. 5d, when the network device is located in a descending orbit arc segment corresponding to a curve segment of a thick solid line, an uplink communication spectrum used by the network device is 5000 MHz to 5150 MHz, and a downlink communication spectrum is 6700 MHz to 6850 MHz; or when the network device is located in an ascending orbit arc segment corresponding to a curve segment of a thin solid line, an uplink communication spectrum used by the network device is 5150 MHz to 5300 MHz, and a downlink communication spectrum is 6850 MHz to 7000 MHz. Alternatively, when the network device is located in a descending orbit arc segment corresponding to a curve segment of a thick solid line, an uplink communication spectrum used by the network device is 5150 MHz to 5300 MHz, and a downlink communication spectrum is 6850 MHz to 7000 MHz; or when the network device is located in an ascending orbit arc segment corresponding to a curve segment of a thin solid line, an uplink communication spectrum used by the network device is 5000 MHz to 5150 MHz, and a downlink communication spectrum is 6700 MHz to 6850 MHz.

Therefore, in Manner 3, the equal bandwidth frequency division networking for the ascending orbit and the descending orbit is used. For the entire communication system, the network device on the ascending orbit uses a half of a spectrum to form a communication network, and the network device on the descending orbit uses the other half of the spectrum to form a network. For a network device, when the network device is located in an ascending orbit arc segment, the network device operates only on a half of a spectrum in a system; or when the network device is located in a descending orbit arc segment, the network device operates on the other half of the spectrum in the system.

In a possible implementation, a sum of the frequency domain resource occupied by the first bandwidth and the frequency domain resource occupied by the second bandwidth is an available frequency domain resource of the network device; or the frequency domain resource occupied by the first bandwidth and the frequency domain resource occupied by the second bandwidth do not overlap each other. Specifically, when the sum of the frequency domain resource occupied by the first bandwidth and the frequency domain resource occupied by the second bandwidth is the available frequency domain resource of the network device. This can improve spectrum utilization. In addition, when the frequency domain resource occupied by the first bandwidth and the frequency domain resource occupied by the second bandwidth do not overlap each other, interference between different frequency domain resources used by the network device in the different movement directions can be avoided, and communication efficiency is improved.

Optionally, a sum of the frequency domain resource occupied by the first bandwidth and the frequency domain resource occupied by the second bandwidth is less than an available frequency domain resource of the network device. For example, a frequency domain resource used as an interval exists between the frequency domain resource occupied by the first bandwidth and the frequency domain resource occupied by the second bandwidth. This improves signal isolation between a signal of the first bandwidth and a signal of the second bandwidth, and avoids interference.

Optionally, the frequency domain resource occupied by the first bandwidth and the frequency domain resource occupied by the second bandwidth may partially or totally overlap. This improves spectrum utilization.

In a possible implementation, the movement information includes at least one of the following: time information corresponding to movement, movement path information, a current position, or movement speed information. Specifically, the movement information associated with the target bandwidth information of the network device may further include other information, so that the network device performs, when the movement information is different, communication by using different target bandwidth information.

For example, when the movement information includes the time information corresponding to the movement, the network device divides running time of the network device into a first time period and a second time period, where when current time is within the first time period, the network device performs communication based on the first bandwidth; or when current time is within the second time period, the network device performs communication based on the second bandwidth.

For another example, when the movement information includes the movement path information, the network device divides a running path of the network device into a first type of path and a second type of path, where when a current position is located in the first type of path, the network device performs communication based on the first bandwidth; or when a current position is located in the second type of path, the network device performs communication based on the second bandwidth.

For another example, when the movement information includes the current position, the network device divides a running area of the network device into a first position set and a second position set, where when the current position is in the first position set, the network device performs communication based on the first bandwidth; or when the current position is in the second position set, the network device performs communication based on the second bandwidth.

For another example, when the movement information includes the movement speed information, the network device divides a running speed of the network device into a first speed range and a second speed range, where when a movement speed is within the first speed range, the network device performs communication based on the first bandwidth; or when the movement speed is within the second speed range, the network device performs communication based on the second bandwidth.

It should be understood that, in the foregoing examples, for implementations of the first bandwidth and the second bandwidth, refer to descriptions in the foregoing embodiment, and corresponding technical effect is implemented. Details are not described herein again.

S402: The network device performs communication based on the target bandwidth information.

In this embodiment, after the network device determines the target bandwidth information in step S401, in step S402, the network device communicates with a terminal device based on the target bandwidth information.

In a possible implementation, the target bandwidth information includes downlink bandwidth information; and that the network device performs communication based on the target bandwidth information includes: The network device sends second information based on a bandwidth indicated by the downlink bandwidth information, where the second information includes at least one of the following: a synchronization signal block (synchronization signal/physical broadcast channel block, SS/PBCH block, an SS/PBCH block, or an SSB), remaining minimum system information (remaining minimum system information, RMSI), or other system information (other system information, OSI). Specifically, the target bandwidth information associated with the movement information of the network device may include the downlink bandwidth information, so that the network device sends the at least one piece of second information based on the downlink bandwidth information.

In a possible implementation, the target bandwidth information further includes uplink bandwidth information, the second information is RMSI, and the RMSI includes indication information indicating the uplink bandwidth information and indication information indicating the downlink bandwidth information. Specifically, the target bandwidth information associated with the movement information of the network device may include the uplink bandwidth information, and when the second information is the RMSI, the RMSI may include the indication information indicating the uplink bandwidth information and the indication information indicating the downlink bandwidth information, so that a receiver (for example, a terminal device) of the RMSI clarifies, based on the RMSI, the uplink bandwidth information and the downlink bandwidth information used by the network device, and further communicates with the network device based on the uplink bandwidth information and the downlink bandwidth information.

Based on the technical solution shown in FIG. 4, after the network device determines the target bandwidth information associated with the movement information of the network device in step S401, in step S402, the network device performs communication based on the target bandwidth information. The associated target bandwidth information may be different when the movement information of the network device is different. In other words, the network device may perform communication by using different target bandwidth information based on different movement information. Therefore, when the neighboring relationship between the different cells may continuously change in the movement process of the network device, because the network device may perform communication by using the different target bandwidth information based on the different movement information, implementation complexity of PCI planning can be reduced, and communication performance can be improved.

Refer to FIG. 6. An embodiment of this application provides a communication apparatus 600. The communication apparatus 600 can implement functions of the network device in the foregoing method embodiment, and therefore can also implement beneficial effect of the foregoing method embodiment. In this embodiment of this application, the communication apparatus 600 may be a network device, or may be an integrated circuit, an element, or the like in the network device, for example, a chip. An example in which the communication apparatus 600 is the network device is used for description in the following embodiment.

In a possible implementation, when the apparatus 600 is configured to perform the method performed by the network device in the foregoing embodiment, the apparatus 600 includes a processing unit 601 and a transceiver unit 602. The processing unit 601 is configured to determine target bandwidth information, where the target bandwidth information is associated with movement information of the communication apparatus. The transceiver unit 602 is configured to perform communication based on the target bandwidth information.

In a possible implementation, the transceiver unit 602 is further configured to obtain first information, where the first information is used to determine the movement information of the communication apparatus.

In a possible implementation, the processing unit 601 is further configured to determine the target bandwidth information of the communication apparatus based on first indication information, where the first indication information indicates the target bandwidth information.

In a possible implementation, that the target bandwidth information is associated with the movement information of the communication apparatus includes: When the movement information indicates that a movement direction of the communication apparatus is a first direction, a bandwidth corresponding to the target bandwidth information is a first bandwidth, or when the movement information indicates that a movement direction of the communication apparatus is a second direction, a bandwidth corresponding to the target bandwidth information is a second bandwidth; and a frequency domain resource occupied by the first bandwidth is greater than a frequency domain resource occupied by the second bandwidth; or a frequency domain resource occupied by the first bandwidth is 0, or a frequency domain resource occupied by the second bandwidth is 0; or a frequency domain resource occupied by the first bandwidth is equal to a frequency domain resource occupied by the second bandwidth.

In a possible implementation, the first direction is from north to south, and the second direction is from south to north; or the first direction is from south to north, and the second direction is from north to south.

In a possible implementation, a sum of the frequency domain resource occupied by the first bandwidth and the frequency domain resource occupied by the second bandwidth is an available frequency domain resource of the communication apparatus; or the frequency domain resource occupied by the first bandwidth and the frequency domain resource occupied by the second bandwidth do not overlap each other.

In a possible implementation, the movement information includes at least one of the following: time information corresponding to movement, movement path information, a current position, or movement speed information.

It should be noted that, for content such as an information execution process of the unit of the communication apparatus 600, refer to the descriptions in the foregoing method embodiment in this application. Details are not described herein.

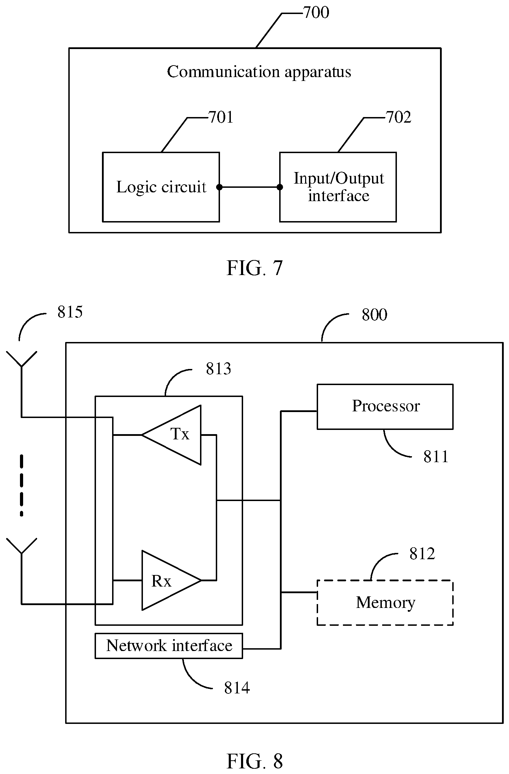

FIG. 7 is another diagram of a structure of a communication apparatus 700 according to this application. The communication apparatus 700 includes at least an input/output interface 702. The communication apparatus 700 may be a chip or an integrated circuit.

Optionally, the communication apparatus further includes a logic circuit 701.

The transceiver unit 602 shown in FIG. 6 may be a communication interface. The communication interface may be the input/output interface 702 in FIG. 7. The input/output interface 702 may include an input interface and an output interface. Alternatively, the communication interface may be a transceiver circuit, and the transceiver circuit may include an input interface circuit and an output interface circuit.

Optionally, when the communication apparatus 700 is configured to implement the method implemented by the network device in the foregoing embodiment, the logic circuit 701 may be configured to determine target bandwidth information, where the target bandwidth information is associated with movement information of the communication apparatus; and the input/output interface 702 is configured to perform communication based on the target bandwidth information. The logic circuit 701 and the input/output interface 702 may further perform other steps performed by the network device in any one of the foregoing embodiments, and implement corresponding beneficial effect. Details are not described herein again.

In a possible implementation, the processing unit 601 shown in FIG. 6 may be the logic circuit 701 in FIG. 7.

Optionally, the logic circuit 701 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processor units (central processor units, CPUs), network processors (network processors, NPs), digital signal processing circuits (digital signal processors, DSPs), microcontrollers (micro controller units, MCUs), programmable logic devices (programmable logic devices, PLDs), or another integrated chip, or any combination of the foregoing chips or processors.

FIG. 8 is a diagram of a structure of a communication apparatus 800 in the foregoing embodiment according to embodiments of this application. The communication apparatus 800 may be specifically the communication apparatus served as the network device in the foregoing embodiment. As shown in FIG. 8, an example in which the network device is implemented by using a network device (or a component in the network device) is used. For a structure of the communication apparatus, refer to the structure shown in FIG. 8.

The communication apparatus 800 includes at least one processor 811 and at least one network interface 814. Further, optionally, the communication apparatus further includes at least one memory 812, at least one transceiver 813, and one or more antennas 815. The processor 811, the memory 812, and the transceiver 813 are connected to the network interface 814, for example, through a bus. In this embodiment of this application, the connection may include various interfaces, transmission lines, buses, or the like. This is not limited in this embodiment. The antenna 815 is connected to the transceiver 813. The network interface 814 is configured to enable the communication apparatus to communicate with another communication device through a communication link. For example, the network interface 814 may include a network interface, for example, an S1 interface, between the communication apparatus and a core network device. The network interface may include a network interface, for example, an X2 or an Xn interface, between the communication apparatus and another communication apparatus (for example, another network device or a core network device).

The processor 811 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 811 in FIG. 8 may integrate functions of the baseband processor and the central processing unit. A person skilled in the art may understand that the baseband processor and the central processing unit each may be an independent processor, and are interconnected through a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 812 may exist independently, and is connected to the processor 811. Optionally, the memory 812 may be integrated with the processor 811, for example, integrated into a chip. The memory 812 may store program code for executing the technical solutions in embodiments of this application, and the processor 811 controls execution of the program code. Various types of computer program code that are executed may also be considered as drivers of the processor 811.

FIG. 8 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 813 may be configured to support receiving or sending of a radio frequency signal between the communication apparatus and a terminal, and the transceiver 813 may be connected to the antenna 815. The transceiver 813 includes a transmitter Tx and a receiver Rx. Specifically, the one or more antennas 815 may receive a radio frequency signal. The receiver Rx of the transceiver 813 is configured to: receive the radio frequency signal from the antenna, convert the radio frequency signal into a digital baseband signal or a digital intermediate frequency signal, and provide the digital baseband signal or the digital intermediate frequency signal to the processor 811, so that the processor 811 performs further processing, for example, demodulation processing and decoding processing, on the digital baseband signal or the digital intermediate frequency signal. In addition, the transmitter Tx of the transceiver 813 is further configured to: receive a modulated digital baseband signal or digital intermediate frequency signal from the processor 811, convert the modulated digital baseband signal or digital intermediate frequency signal into a radio frequency signal, and transmit the radio frequency signal through the one or more antennas 815. Specifically, the receiver Rx may selectively perform one-level or multi-level down-conversion mixing processing and analog-to-digital conversion processing on the radio frequency signal, to obtain the digital baseband signal or the digital intermediate frequency signal. A sequence of the down-conversion mixing processing and the analog-to-digital conversion processing is adjustable. The transmitter Tx may selectively perform one-level or multi-level up-conversion mixing processing and digital-to-analog conversion processing on the modulated digital baseband signal or digital intermediate frequency signal, to obtain the radio frequency signal. A sequence of the up-conversion mixing processing and the digital-to-analog conversion processing is adjustable. The digital baseband signal and the digital intermediate frequency signal may be collectively referred to as a digital signal.

The transceiver 813 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the communication apparatus 800 shown in FIG. 8 may be specifically configured to implement steps implemented by the network device in the foregoing method embodiments, and implement technical effect corresponding to the network device. For specific implementations of the communication apparatus 800 shown in FIG. 8, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. An architecture of the network system includes the network device in any one of the foregoing embodiments.

Optionally, the communication system further includes at least one terminal device.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
determining target bandwidth information, wherein the target bandwidth information is associated with movement information of a communication apparatus; and
performing communication based on the target bandwidth information.

2. The method according to claim 1, wherein the method further comprises:
obtaining first information, wherein the first information is used to determine the movement information of the communication apparatus.

3. The method according to claim 1, wherein the determining target bandwidth information of the communication apparatus comprises:
determining the target bandwidth information of the communication apparatus based on first indication information, wherein the first indication information indicates the target bandwidth information.

4. The method according to any one of claims 1 to 3, wherein that the target bandwidth information is associated with the movement information of the communication apparatus comprises:
when the movement information indicates that a movement direction of the communication apparatus is a first direction, a bandwidth corresponding to the target bandwidth information is a first bandwidth, or when the movement information indicates that a movement direction of the communication apparatus is a second direction, a bandwidth corresponding to the target bandwidth information is a second bandwidth; and
a frequency domain resource occupied by the first bandwidth is greater than a frequency domain resource occupied by the second bandwidth; or a frequency domain resource occupied by the first bandwidth is 0, or a frequency domain resource occupied by the second bandwidth is 0; or a frequency domain resource occupied by the first bandwidth is equal to a frequency domain resource occupied by the second bandwidth.

5. The method according to claim 4, wherein
the first direction is from north to south, and the second direction is from south to north; or
the first direction is from south to north, and the second direction is from north to south.

6. The method according to claim 4 or 5, wherein
a sum of the frequency domain resource occupied by the first bandwidth and the frequency domain resource occupied by the second bandwidth is an available frequency domain resource of the communication apparatus; or
the frequency domain resource occupied by the first bandwidth and the frequency domain resource occupied by the second bandwidth do not overlap each other.

7. The method according to any one of claims 1 to 6, wherein the movement information comprises at least one of the following:
time information corresponding to movement, movement path information, a current position, or movement speed information.

8. A communication apparatus, comprising a processing unit and a transceiver unit, wherein
the processing unit is configured to determine target bandwidth information, wherein the target bandwidth information is associated with movement information of the communication apparatus; and
the transceiver unit is configured to perform communication based on the target bandwidth information.

9. The apparatus according to claim 8, wherein
the transceiver unit is further configured to obtain first information, wherein the first information is used to determine the movement information of the communication apparatus.

10. The apparatus according to claim 8, wherein
the processing unit is further configured to determine the target bandwidth information of the communication apparatus based on first indication information, wherein the first indication information indicates the target bandwidth information.

11. The apparatus according to any one of claims 8 to 10, wherein that the target bandwidth information is associated with the movement information of the communication apparatus comprises:
when the movement information indicates that a movement direction of the communication apparatus is a first direction, a bandwidth corresponding to the target bandwidth information is a first bandwidth, or when the movement information indicates that a movement direction of the communication apparatus is a second direction, a bandwidth corresponding to the target bandwidth information is a second bandwidth; and
a frequency domain resource occupied by the first bandwidth is greater than a frequency domain resource occupied by the second bandwidth; or a frequency domain resource occupied by the first bandwidth is 0, or a frequency domain resource occupied by the second bandwidth is 0; or a frequency domain resource occupied by the first bandwidth is equal to a frequency domain resource occupied by the second bandwidth.

12. The apparatus according to claim 11, wherein
the first direction is from north to south, and the second direction is from south to north; or
the first direction is from south to north, and the second direction is from north to south.

13. The apparatus according to claim 11 or 12, wherein
a sum of the frequency domain resource occupied by the first bandwidth and the frequency domain resource occupied by the second bandwidth is an available frequency domain resource of the communication apparatus; or
the frequency domain resource occupied by the first bandwidth and the frequency domain resource occupied by the second bandwidth do not overlap each other.

14. The apparatus according to any one of claims 8 to 13, wherein the movement information comprises at least one of the following:
time information corresponding to movement, movement path information, a current position, or movement speed information.

15. A communication apparatus, comprising at least one processor, wherein the at least one processor is coupled to a memory;
the memory is configured to store a program and/or instructions; and
the at least one processor is configured to enable, based on the program and/or the instructions, the communication apparatus to perform the method according to any one of claims 1 to 7.

16. A computer-readable storage medium, wherein the medium stores instructions, and when the instructions are executed by a computer, the method according to any one of claims 1 to 7 is implemented.

17. A computer program product, comprising instructions, wherein when the instructions are run on a computer, the computer is enabled to perform the method according to any one of claims 1 to 7.
